# EUROPEAN PATENT APPLICATION

(11) **EP 2 233 517 A1**
(43) Date of publication of application: **29.09.2010**
(21) Application number: 08857290.4
(22) Date of filing: 08.12.2008
(51) Int. Cl.: C08J 11/10, B29B 7/90, B29B 9/14, B29B 17/00

(54) **METHOD OF RECYCLING FIBER-REINFORCED PLASTIC**

(30) Priority: 07.12.2007 JP 2007317513
(71) Applicant: Toyota Jidosha Kabushiki Kaisha, Toyota-shi, Aichi 471-8571 (JP); Kojima Sangyo Kabushiki Kaisha, Aichi 470-0206 (JP)
(72) Inventor: TAKAHASHI, Naoyuki, Toyota-shi Aichi 471-8571 (JP); NAGASE, Tetsuji, Nishikamo-gun Aichi 470-0206 (JP)
(74) Representative: Albutt, Anthony John
(86) International application number: PCT/JP2008/072268
(87) International publication number: WO 2009/072651

(57) **Abstract**

The present invention provides a method of recycling a fiber-reinforced plastic by which a recycled material of a fiber-reinforced plastic having excellent strength properties can be obtained. The method is a method of recycling a fiber-reinforced plastic comprising carbon fibers and a thermosetting resin (epoxy resin), comprising a first step of producing a harmless material by subjecting a fiber-reinforced plastic B to heat treatment so as to burn off an epoxy resin and a second step of applying a sizing agent to or spraying a sizing agent over the harmless material, producing a strip-shaped harmless material B', and producing a recycled material containing short carbon fibers during kneading of the strip-shaped harmless material B' and a thermoplastic resin (polypropylene).

## Description

### Technical Field

The present invention relates to a method of recycling a fiber-reinforced plastic.

### Background Art

Carbon fiber-reinforced plastic (CFRP) is lightweight and excellent in mechanical properties, and thus it is used for various purposes, such as body members used in the automotive industry, body and blade members used in the aviation/space industries, and golf clubs, tennis rackets, fishing rods, and the like used in the sport/leisure industries. At the same time, the disposal process for spent carbon fiber-reinforced plastic members has been seriously problematic. In view of environmental influence and the like against the backdrop of the recent active trend of material recycling, an important issue has arisen regarding the way in which to recycle spent carbon fiber-reinforced plastic members without simply processing such members by combustion or landfilling.

Herein, Patent Documents 1 and 2 disclose conventional techniques such as a method of processing or recycling carbon fiber-reinforced plastic members. Patent Document 1 discloses a technique relating to a recycling method comprising burning a thermosetting resin serving as a matrix resin for a carbon fiber-reinforced plastic, forming a ball of carbon fibers having squamous surfaces by allowing the thermosetting resin to remain as it is to a certain extent, melting the ball of carbon fibers with thermoplastic resin chips during kneading, and subjecting the resultant to extrusion forming and then cutting so as to obtain pellets.

In addition, Patent Document 2 discloses a method of processing a waste plastic that is a solid product comprising a ball of fibers obtained by melting FRP chips and a thermoplastic plastic material during kneading, followed by hardening via cooling.

Patent Document 1: JP Patent Publication (Kokai) No. 7-118440 A (1995)

Patent Document 2: JP Patent Publication (Kokai) No. 2001-30245 A

### Disclosure of the Invention

### Problem to be Solved by the Invention

In the recycling method of Patent Document 1, a thermosetting resin serving as a matrix resin remains as it is, in a pellet form, to a certain extent. That is to say, such thermosetting resin is not completely rendered harmless by burning. Therefore, even if such thermosetting resin is mixed with a thermoplastic resin, a remaining portion of the thermosetting resin results in foreign objects in pellets. Accordingly, the strength properties of such pellets inevitably deteriorate. This is because a thermosetting resin that results in foreign objects is likely to function as a fracture origin when external force (tension, bending, shearing, etc.) is applied to the pellets. For instance, splitting or fracturing of pellets or the like takes place starting from such fracture origin, resulting in a significant decrease in strength properties. In addition, the method of processing a waste plastic disclosed in Patent Document 2 does not comprise a step of completely detoxifying a thermosetting resin. Therefore, as in the case of the recycling method of Patent Document 1, the strength properties of a solid product comprising fibers to be recycled are extremely poor.

The present invention has been made in view of the above problems. It is an object of the present invention to provide a method of recycling a fiber-reinforced plastic by which a recycled material of a high-quality fiber-reinforced plastic having excellent strength properties can be obtained.

### Means for Solving Problem

In order to achieve the above object, the method of recycling a fiber-reinforced plastic of the present invention is a method of recycling a fiber-reinforced plastic comprising carbon fibers and a thermosetting resin, comprising a first step of producing a harmless material by subjecting the fiber-reinforced plastic to heat treatment so as to burn the thermosetting resin and a second step of producing a recycled material during kneading of the harmless material and a thermoplastic resin.

In the method of recycling of a fiber-reinforced plastic of the present invention, a thermosetting resin serving as a matrix resin is first burnt so as to be completely rendered harmless, and then the thus produced harmless material (an epoxy-component-free material) and a thermoplastic resin are kneaded together so as to produce a recycled material. For example, when necessary portions are cut out from a prepreg material comprising fiber-reinforced plastic sheets laminated to each other, a recycled material is produced from the remaining waste prepreg material. A recycled material according to the present method contains no thermosetting resin that results in foreign objects. Therefore, a high-quality recycled material having excellent strength properties can be produced.

In addition, in a preferred embodiment of the method of recycling a fiber-reinforced plastic of the present invention, a recycled material containing short carbon fibers is produced by applying a sizing agent to or spraying a sizing agent over the harmless material and then pulverizing carbon fibers constituting the harmless material during kneading of the harmless material and a thermoplastic resin in the second step.

The handleability of the harmless material produced in the burning step decreases due to floating of carbon fibers. Therefore, in order to prevent floating of carbon fibers, to improve handleability, and to improve interface adherability between the carbon fibers and the thermoplastic resin, a sizing agent is applied to or sprayed over a harmless material, followed by kneading of the harmless material and a thermoplastic resin.

Subsequently, carbon fibers constituting the harmless material are pulverized during kneading of the harmless material and a thermoplastic resin, such that a recycled material containing short carbon fibers can be produced. In one embodiment of a method of pulverizing carbon fibers herein, carbon fibers are pulverized in an extruder by a method wherein a harmless material are cut into strips, the harmless material is introduced into an extruder via an introduction hopper having a width not less than at least the harmless material thickness, and a thermoplastic resin is introduced into the extruder, followed by kneading. In addition, a known device can be used as such extruder, and thus the use of such device does not cause a steep cost increase.

In addition, in a preferable embodiment, the method of recycling a fiber-reinforced plastic of the present invention further comprises a third step of cooling the recycled material produced in the second step and pelletizing the cooled recycled material.

Unlike a hot cut method, wherein a kneaded material is directly formed into chips without cooling, for example, a recycled material produced in the second step is subjected to cooling in order to impart hardness to the material to an extent comparable to the hardness of a pelletized product, followed by pelletization. Thus, pelletization efficiency can be increased.

In a preferable embodiment of the method of recycling a fiber-reinforced plastic of the present invention, the burning temperature in the first step corresponds to temperature conditions within the range of 500°C to 900°C at which a thermosetting resin is burnt so as to be rendered harmless without causing no damage to carbon fibers.

If the burning temperature is excessively high, damages are caused to carbon fibers, resulting in, for example, fine perforation of the fiber bodies or reduction of tensile strength properties originally imparted to carbon fibers through thinning of carbon fibers due to burning. The present inventors have verified and identified burning temperature conditions that do not cause the above problems as falling within the range of 500°C to 900°C. In addition, if the burning temperature is not more than 400°C, a thermosetting resin serving as a matrix resin is not completely rendered harmless, which causes deterioration of the strength properties of a recycled material.

Further, in a preferable embodiment of the method of recycling a fiber-reinforced plastic of the present invention, the burning time of the fiber-reinforced plastic is 1 to 240 minutes.

The present inventors have verified and identified the importance of burning time conditions that do not cause deterioration in tensile strength properties originally imparted to carbon fibers, in addition to the above temperature conditions. Specifically, when the burning temperature is approximately 900°C, the burning time is approximately 1 to 4 minutes, and when the burning temperature is approximately 500°C, the burning time is approximately 3 to 4 hours. A recycled material having excellent strength properties can be produced (recycled) by optimally controlling the burning temperature conditions and the burning time while maintaining the initial strength (and particularly the tensile strength) of carbon fibers.

### Effects of the Invention

As is understood based on the above descriptions, according to the method of recycling a fiber-reinforced plastic of the present invention, a high-quality recycled material having excellent strength properties can be produced without a steep increase in production (recycling) cost.

### Brief Description of the Drawings

Fig. 1 is a plan view of a waste prepreg material and strip cut lines.
Fig. 2 is an explanatory view of the process of the spraying of a sizing agent over the waste prepreg material shown in fig. 1.
Fig. 3 shows strip-shaped harmless materials obtained by cutting a harmless material comprising a rendered harmless waste prepreg material along strip cut lines shown in fig. 1.
Fig. 4 is an explanatory view of production of a recycled material through the introduction of a strip-shaped harmless material and polypropylene to an extruder via a hopper, followed by kneading, cooling, and pelletization.
Fig. 5 shows a V-V sagittal section view of fig. 4.
Fig. 6 shows a graph of experimental results regarding the relationship between carbon content and tensile strength for both a recycled material produced via a detoxifying step (Example) and a conventional recycled material produced without a detoxifying step (Comparative Example).
Fig. 7 shows a graph of experimental results regarding the relationship between carbon content and heat distortion temperature for both a recycled material produced via a detoxifying step (Example) and a conventional recycled material produced without a detoxifying step (Comparative Example).

### Explanation of Reference Numerals

B: Fiber-reinforced plastic material; B8: Waste prepreg material; B': Strip-shaped harmless material; B": Extruded strand; C1 to C7: Strip cut lines; S: Spraying device; S1: Spraying nozzle; T: Tray; U: Extruder; Z: Water tank; R1 to R4: Guide rollers; P: Pelletizer; and C: Chip-shaped recycled material

### Best Mode for Carrying Out the Invention

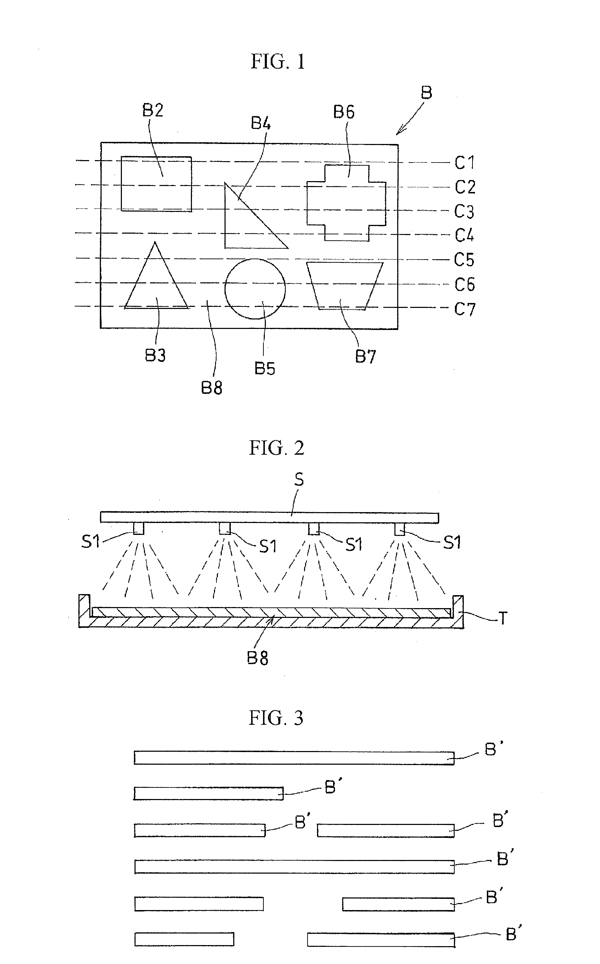

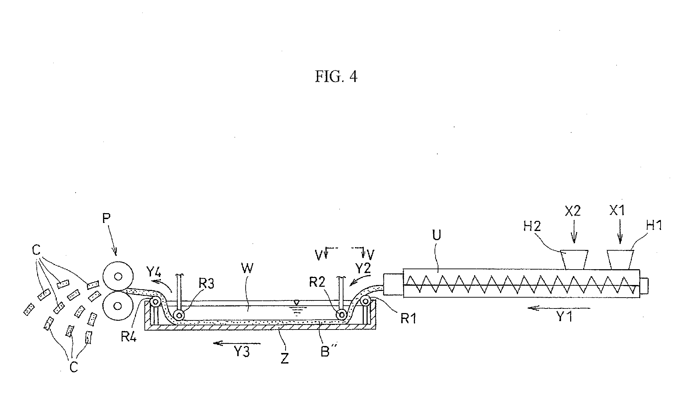

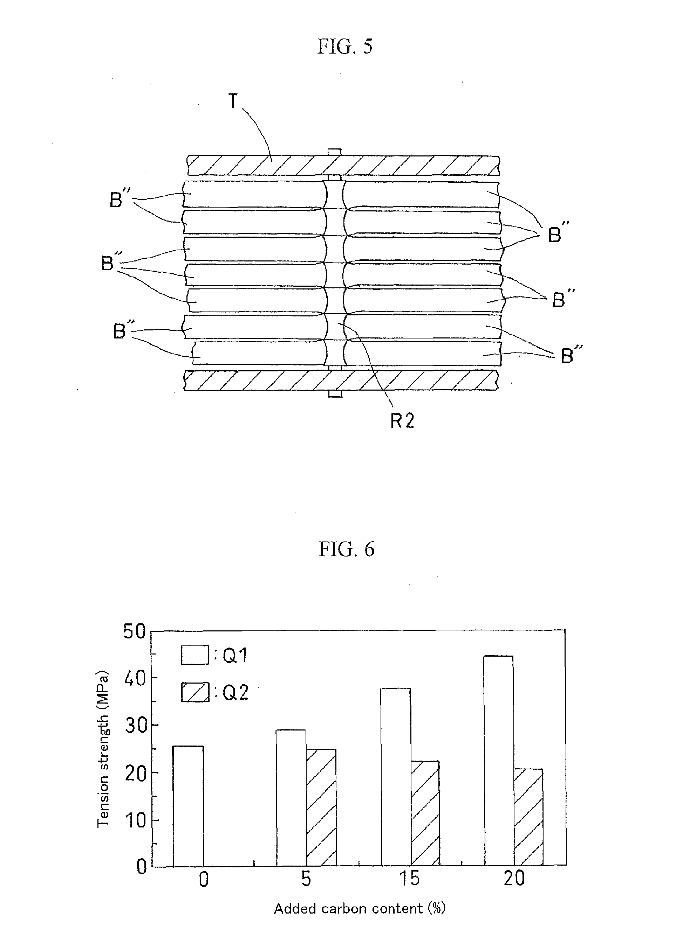

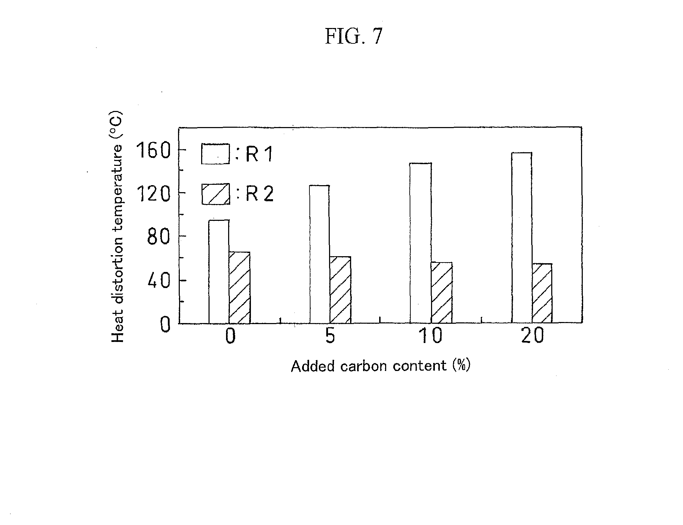

Hereinafter, the embodiments of the present invention are described with reference to the drawings. Fig. 1 is a plan view of a waste prepreg material and strip cut lines. Fig. 2 is an explanatory view of the process of the spraying of a sizing agent over the waste prepreg material shown in fig. 1. Fig. 3 shows strip-shaped harmless materials obtained by cutting a harmless material comprising a rendered harmless waste prepreg material along strip cut lines shown in fig. 1. Fig. 4 is an explanatory view of production of a recycled material through the introduction of a strip-shaped harmless material and polypropylene that is a thermoplastic resin to an extruder via a hopper, followed by kneading, cooling, and pelletization. Fig. 5 shows a V-V sagittal section view of fig. 4. Fig. 6 shows a graph of experimental results regarding the relationship between carbon content and tensile strength for both a recycled material produced via a detoxifying step (Example) and a conventional recycled material produced without a detoxifying step (Comparative Example). Fig. 7 shows a graph of experimental results regarding the relationship between carbon content and heat distortion temperature for both a recycled material produced via a detoxifying step (Example) and a conventional recycled material produced without a detoxifying step (Comparative Example). In addition to polypropylene, examples of the aforementioned thermoplastic resin include polyethylene and polyvinyl chloride.

Fig. 1 shows an embodiment of a waste prepreg material. Specifically, desired structure members B2 to B7, such as automotive strength members, are cut out from a fiber-reinforced plastic material B. As a result of such cutting step, a perforated waste prepreg material B8 remains. Herein, the fiber-reinforced plastic material B comprises many carbon fibers bound to each other with an epoxy resin that serves as a matrix resin, which is a thermosetting resin. A plurality of sheet members each having a layer thickness of approximately 0.3 to 0.7 mm are laminated such that the fiber-reinforced plastic material B is formed. In addition to an epoxy resin, examples of the aforementioned thermosetting resin include phenol resin and melamine resin.

First, a remaining waste prepreg material B8 is subjected to burning treatment for a certain time in an atmosphere at a certain temperature. Thus, a material comprising a completely rendered harmless epoxy resin is produced. Herein, burning treatment is carried out via infrared-ray burning, induction burning, flame treatment, the use of an electric heater, or the like. In addition, in the case of the waste prepreg material B8 comprising a plurality of sheet members laminated to each other, the sheets do not completely adhere to each other. Therefore, upon burning treatment, heat is sufficiently conducted between sheets, allowing the complete burning of the epoxy resin.

Table 1 below shows experimental results regarding the relationship between burning temperature conditions and burning time that does not cause damage to carbon fibers contained in the waste prepreg material B8 obtained by the present inventors. In addition, in this experiment, the degree of damage was confirmed based on SEM images of prepreg material samples subjected to burning treatment. In the table, "x" represents a sample containing an epoxy resin remaining therein, "Δ" represents a sample containing damaged carbon fibers (perforated fibers, loosened fiber bundles, etc.) without any epoxy resin remaining therein, and "O" represents a sample without any epoxy resin remaining therein and without any damaged carbon fibers.

**[Table 1]**

| Burning time (minutes) | Burning temperature (°C) | | | | | | |
|---|---|---|---|---|---|---|---|
| | 400 | 500 | 600 | 700 | 800 | 900 | 1000 |
| 1 to 4 | × | × | × | × | ○ | ○ | △ |
| 5 | × | × | × | ○ | ○ | △ | △ |
| 15 | × | × | × | ○ | △ | △ | △ |
| 30 | × | × | × | △ | △ | △ | △ |
| 60 | × | × | ○ | △ | △ | △ | △ |
| 120 | × | × | ○ | △ | △ | △ | △ |
| 180 | × | ○ | ○ | ○ | △ | △ | △ |
| 240 | × | ○ | ○ | △ | △ | △ | △ |

The waste prepreg material B8 is subjected to burning treatment under conditions corresponding to a combination of burning temperature and burning time for an evaluation result represented by "O" in table 1. Thus, a harmless material is produced.

Then, as shown in fig. 2, the harmless material B8 is placed in a tray T and a sizing agent that is sufficiently compatible to a thermoplastic resin is sprayed over the harmless material B8 via a spraying nozzle S 1 of a spraying device S installed on the tray T. Herein, a sizing agent is selected and used in accordance with a thermoplastic resin used for preventing carbon fibers from being loosened and improving the interface adherability between carbon fibers and a thermoplastic resin to be kneaded in the subsequent step. Such a sizing agent is in the form of liquid containing components such as a polyacrylic polymer.

Next, the harmless material B8 having a surface on which the sizing agent has been sprayed is removed from the tray T. After the sizing agent has been completely dried, the material is cut along strip cut lines C1 to C7 shown in fig. 1. Accordingly, strip-shaped harmless materials B' shown in fig. 3 are produced. Herein, the width of each strip-shaped harmless material B' shown in the figure can be determined to be approximately 10 mm.

Then, as shown in fig. 4, a strip-shaped harmless material B' is introduced into an extruder U via an introduction hopper H1 (in the X1 direction). An open slit of the introduction hopper H1 is designated to have a width of approximately 0.8 mm and a length of approximately 15 mm. The hopper has a roller (not shown) that supplies a strip-shaped harmless material B' into an extruder U.

The extruder U is equipped not only with an introduction hopper H1 used for a strip-shaped harmless material B' but also with a hopper H2 used for the supply of a thermoplastic resin (polypropylene). Polypropylene is supplied into an extruder U via the hopper H2 (in the X2 direction) such that polypropylene is kneaded together with the strip-shaped harmless material B' by a screw installed inside the extruder U and extruded toward a water tank (in the Y1 direction) located anterior to the extruder. In addition, the percentage of the weight of the harmless material B' to the total weight of polypropylene and the strip-shaped harmless material B' is preferably adjusted to approximately 5% to 20% by weight.

A water tank Z filled with water W is located anterior to the extruder U. In the water tank Z, a guide roller R1 that guides a kneaded material extruded from the extruder U to the lower portion of the water tank (in the Y2 direction), a guide roller R2 that guides the material to the anterior lower portion of the water tank, a guide roller R3 that receives a kneaded material extruded in the lower portion in the water tank (in the Y3 direction) in the anterior lower portion of the water tank and guides the material upward, and a guide roller R4 that guides a kneaded material outside the water tank (in the Y4 direction) are provided in such order.

The material is cooled while being guided through the water tank Z such that an extruded strand B" exhibiting a desired strength is produced.

Fig. 5 is an overhead plan view of the guide roller R2. In addition, the other guide rollers have similar configurations.

The guide roller R2 has a shape composed of a plurality of curved concave portions arranged in a longitudinal direction. A plurality of rod-shaped strands B" are formed by such curved concave portions.

When referring back to fig. 4, it is shown that each strand B" extruded outside the water tank via the guide roller R4 is formed into chips by a pelletizer P located anterior to the water tank such that a chip-shaped recycled material C is formed. In addition, carbon fibers contained in such a chip-shaped recycled material C are short fibers with lengths of approximately 0.1 to 3 mm.

Each formed recycled material C contains no damaged carbon fibers within itself. In addition, no epoxy resin is contained in polypropylene serving as a matrix resin. Therefore, a recycled material C is a recycled material having excellent tensile strength properties and no weak portions that can serve as fracture origins when external force is applied thereto.

[Experiments and experimental results regarding the relationship between carbon content and tensile strength for both a recycled material produced via a detoxifying step (Example) and a conventional recycled material produced without a detoxifying step (Comparative Example)]

The present inventors prepared recycled material test pieces produced via a detoxifying step (Example) and conventional recycled material test pieces produced without a detoxifying step (Comparative Example) by changing the added carbon content (carbon fiber content). The tensile strength of each test piece was determined. The results are shown in fig. 6.

In fig. 6, Q1 refers to the Example and Q2 refers to the Comparative Example. Based on fig. 6, it is understood that differences in terms of tension strength tend to significantly increase as carbon content increases. As a result, the strength applicable in the Example was approximately 2.3 times greater than that applicable in the Comparative Example when the carbon content was 20% by weight. Herein, the graph does not show values for cases in which the added carbon content exceeds 20% by weight. However, the present inventors have verified that the strength tends to decrease when the added carbon content exceeds 20% by weight. This is because the amount of matrix resin excessively decreases in inverse proportion to the added carbon content.

[Experiments and experimental results regarding the relationship between carbon content and heat distortion temperature for both a recycled material produced via a detoxifying step (Example) and a conventional recycled material produced without a detoxifying step (Comparative Example)]

In addition, the present inventors conducted comparative experiments relating to heat distortion temperature (i.e., heat-resistant performance) in connection with the Example and the Comparative Example. Also, test pieces were prepared by changing the added carbon content in this experiment. The results are shown in fig. 7.

In fig. 7, Q1 refers to the Example and Q2 refers to the Comparative Example. Based on fig. 7, it was demonstrated that heat-resistant performance was improved for the d rendered harmless material obtained in the Example, compared with the case of the non-rendered harmless material obtained in the Comparative Example when the added carbon content was 0, 5% by weight, 10% by weight, or 20% by weight. It is also demonstrated that heat distortion temperature (heat-resistant temperature) in the Example was particularly improved to an extent approximately 3 times greater than that in the case of the Comparative Example when the added carbon content was 10% by weight or 20% by weight.

As is apparent from the experimental results shown in figs. 6 and 7, a recycled material produced by the method of recycling a fiber-reinforced plastic of the present invention is significantly superior to a conventional recycled material in terms of tensile strength properties and heat-resistant performance. Therefore, such recycled material is a preferable material for production of a member required to have either or both such features.

The embodiments of the present invention are described in greater detail with reference to the drawings, although the specific configuration of the present invention is not limited thereto. The present invention encompasses various designs and changes that do not depart from the spirit or scope of the present invention.

## Claims

1. A method of recycling a fiber-reinforced plastic comprising carbon fibers and a thermosetting resin, comprising:
a first step of producing a harmless material by subjecting the fiber-reinforced plastic to heat treatment so as to burn the thermosetting resin; and
a second step of producing a recycled material during kneading of the harmless material and a thermoplastic resin.

2. The method of recycling a fiber-reinforced plastic according to claim 1, wherein a recycled material containing short carbon fibers is produced by applying a sizing agent to or spraying a sizing agent over the harmless material and then pulverizing carbon fibers constituting the harmless material during kneading of the harmless material and a thermoplastic resin in the second step.

3. The method of recycling a fiber-reinforced plastic according to claim 1 or 2, which further comprises a third step of cooling the recycled material produced in the second step and pelletizing the cooled recycled material.

4. The method of recycling a fiber-reinforced plastic according to any one of claims 1 to 3, wherein a harmless material are cut into strips, the harmless material is introduced into an extruder via an introduction hopper having a width not less than at least the harmless material thickness, and a thermoplastic resin is introduced into the extruder, followed by kneading of the harmless material and the thermoplastic resin in the second step.

5. The method of recycling a fiber-reinforced plastic according to any one of claims 1 to 4, wherein the burning temperature in the first step corresponds to temperature conditions within the range of 500°C to 900°C at which a thermosetting resin is burnt so as to be rendered harmless without causing no damage to carbon fibers.

6. The method of recycling a fiber-reinforced plastic according to claim 5, wherein the burning time of the fiber-reinforced plastic is 1 to 240 minutes.
